# EUROPÄISCHE PATENTSCHRIFT

(11) **EP 0 472 883 B1**
(45) Veröffentlichungstag und Bekanntmachung des Hinweises auf die Patenterteilung: **26.10.1994**
(21) Anmeldenummer: 91111901.4
(22) Anmeldetag: 17.07.1991
(51) Int. Cl.: B60N 2/32, B60P 3/36

(54) **Halterung für eine Sitzbank**
Support for a seat bench
Fixation d'un banc

(30) Priorität: 25.08.1990 DE 9012256 U
(43) Veröffentlichungstag der Anmeldung: 04.03.1992
(73) Patentinhaber: Schuler, Karl-Heinz, D-88213 Ravensburg (DE)
(72) Erfinder: Schuler, Karl-Heinz, D-88213 Ravensburg (DE)
(74) Vertreter: Engelhardt, Guido, Dipl.-Ing.

(56) Entgegenhaltungen:
- EP-A- 0 067 648
- WO-A-85/03912
- DE-U- 8 515 404
- GB-A- 683 244
- GB-A- 1 233 975
- GB-A- 2 047 635
- US-A- 3 946 678
- US-A- 4 949 931

## Beschreibung

Die Erfindung bezieht sich auf eine Halterung für eine Sitzbank eines Reisemobils, die mittels eines Traggestells und zwei an diesem angebrachten Laufschienen sowie zwei am Boden des mit einer seitlichen Eingangstür versehenen Fahrzeuges befestigten Bodenschienen in dessen Längsrichtung verschiebbar gehalten ist.

Bei den bekannten Halterungen dieser Art sind die Bodenschienen, damit diese nicht in den Eingangs- und Sitzbereich des Fahrzeuges hineinragen und dort in Form von Bodenschwellen störend wirken, relativ kurz bemessen, der Verstellbereich der Sitzbank ist daher gering. Des weiteren ist von Nachteil, daß die Sitzbank mit bedingt durch in den Innenraum des Fahrzeuges vorstehenden Einbauten nicht ohne weiteres von den Bodenschienen abgenommen werden kann, diese ist vielmehr, sofern der Innenraum als Transportraum genutzt werden soll, auf umständliche Art auszubauen.

Aufgrund des dafür erforderlichen großen Zeitaufwandes wird daher, obwohl dies angezeigt wäre, ein Fahrzeug oftmals nicht umgerüstet, die Transportgüter werden vielmehr einfach auf der Sitzbank abgelegt. Verschmutzungen und Beschädigungen sind dabei nahezu unvermeidbar.

Aufgabe der Erfindung ist es demnach, eine Halterung für eine Sitzbank eines Reisemobils der vorgenannten Gattung zu schaffen, mittels der es nicht nur möglich ist, die Sitzbank über einen großen Bereich in Längsrichtung des Fahrzeuges zu verstellen und in mehreren Betriebsstellungen sicher zu arretieren, sondern die auch einen einfachen Ausbau der Sitzbank trotz vorstehender Einbauten in kurzer Zeit ermöglicht. Das Umrüsten eines Fahrzeuges soll somit ohne Schwierigkeiten zu bewerkstelligen sein, dennoch soll der Boden des Fahrzeuges im Eingangs- und Sitzbereich frei von störenden Einbauten gehalten werden. Des weiteren soll der dafür erforderliche Bauaufwand gering sein, so daß auch eine wirtschaftliche Fertigung zu erzielen ist.

Gemäß der Erfindung wird dies dadurch erreicht, daß zusätzlich zu den die Laufschienen des Traggestells abstützenden Bodenschienen zwei weitere seitlich gegenüber diesen nach außen versetzt angeordnete Bodenschienen vorgesehen sind, von denen die eine Bodenschiene im Bereich der Eingangstür des Fahrzeuges an einer vertikalen Wand und die andere Bodenschiene auf der gegenüberliegenden Seite nahe der Außenwand des Fahrzeuges angebracht sind, und daß das Traggestell in dem der Rückenlehne der Sitzbank gegenüberliegenden Bereich nach außen ragende Arme aufweist, an deren Enden jeweils ein Stützglied befestigt ist, die in beiden äußeren Bodenschienen verschiebbar geführt sind.

Zweckmäßig ist es hierbei, die an einer vertikalen Wand des Fahrzeuges befestigte Bodenschiene an der vertikalen Wand einer Trittstufe oder vertikal über oder unter einer Laufschiene einer Schiebetür anzubringen, die gegenüberliegende Bodenschiene sollte zwischen zwei Einbauteilen, beispielsweise zwischen zwei Wandschränken, am Boden des Fahrzeuges befestigt sein.

Des weiteren ist es angebracht, die Sitzbank mittels einer auf der der Eingangstür zugekehrten Laufschiene angeordneten Federraste, die in Ausnehmungen der diese abstützenden Bodenschiene einrastbar ist, in mindestens zwei, vorzugsweise in drei Betriebsstellungen zu arretieren.

Wird eine Halterung gemäß der Erfindung ausgebildet, indem zwei zusätzliche Bodenschienen im Bereich der Eingangstür an einer vertikalen Wand und nahe der gegenüberliegenden Außenwand des Fahrzeuges angebracht werden, in denen das Traggestell über auskragende Arme mittels Stützgliedern verschiebbar geführt ist, so ist es möglich, die Bodenschienen lang zu bemessen und die Sitzbank somit in einem großen Bereich zu verstellen, ohne daß am Boden des Fahrzeuges im Eingangs- und Sitzbereich störende Einbauten anzuordnen sind. Die zusätzlichen Bodenschienen sind vielmehr an Stellen angeordnet, die bisher nicht genutzt werden, so daß durch diese die Nutzbarkeit des Fahrzeuges nicht beeinträchtigt wird.

Des weiteren ist von Vorteil, daß die Sitzbank problemlos, und zwar trotz in den Innenraum ragende Einbauten in Form von Wandschränken, in sehr kurzer Zeit ausgebaut und das Fahrzeug somit zum Transport von Gütern umgerüstet werden kann. Zum Ausfahren der Stützglieder aus den beiden zusätzliche Bodenschienen ist nämlich nur ein sehr kurzer Verstellweg erforderlich, irgendwelche Befestigungen sind demnach nicht zu lösen, die Stützglieder sind lediglich durch Verschieben der Sitzbank aus den Bodenschienen auszuhängen, um diese aus dem Fahrzeug herausnehmen zu können. Und da auch die zusätzlichen Bodenschienen sowie die in diese eingreifenden Stützglieder aus herkömmlichen Bauteilen bestehen können, ist auch eine wirtschaftliche Fertigung der vorschlagsgemäß ausgebildeten Halterung gegeben.

In der Zeichnung ist ein Ausführungsbeispiel der für eine Sitzbank eines Reisemobils vorgesehenen gemäß der Erfindung ausgebildeten Halterung dargestellt, das nachfolgend im einzelnen erläutert ist.
Hierbei zeigt, jeweils in perspektivischer Darstellung:
- Figur 1: die in einem Reisemobil eingebaute, in dessen Längsrichtung mittels einer Halterung verschiebbar abgestützte Sitzbank in Wohnstellung,
- Figur 2: die Sitzbank nach Figur 1 in Fahrstellung und
- Figur 3: die Sitzbank nach Figur 1 in Schlafstellung.

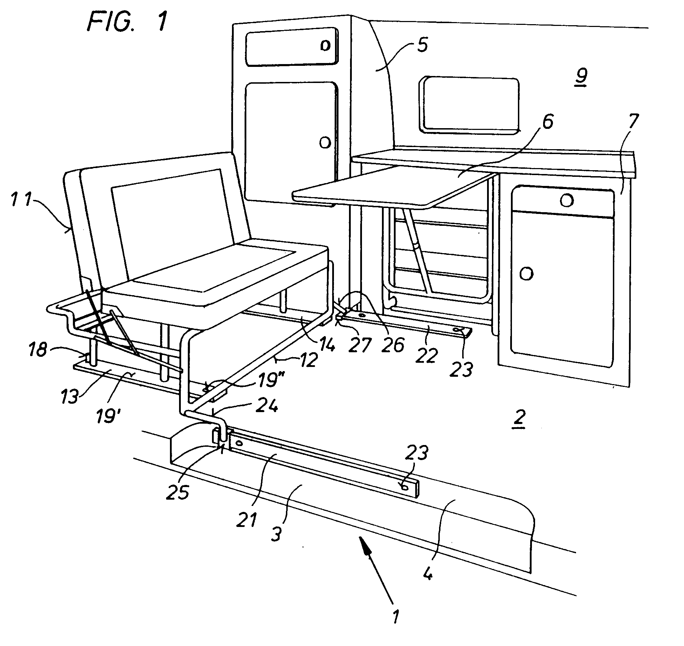

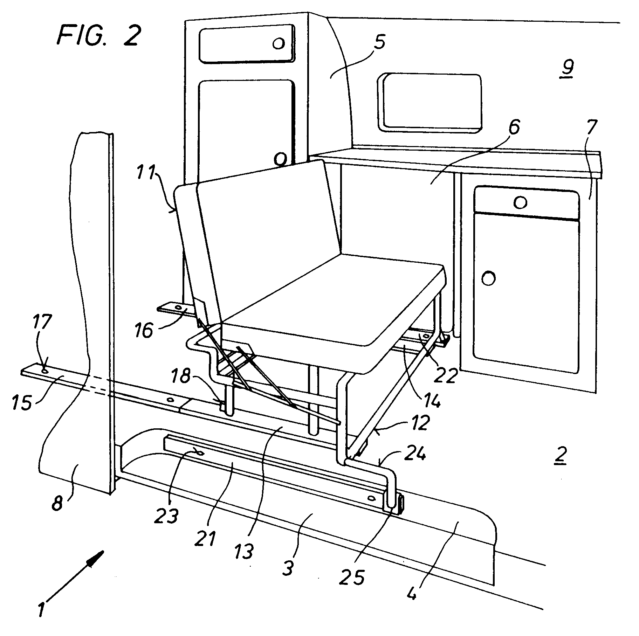

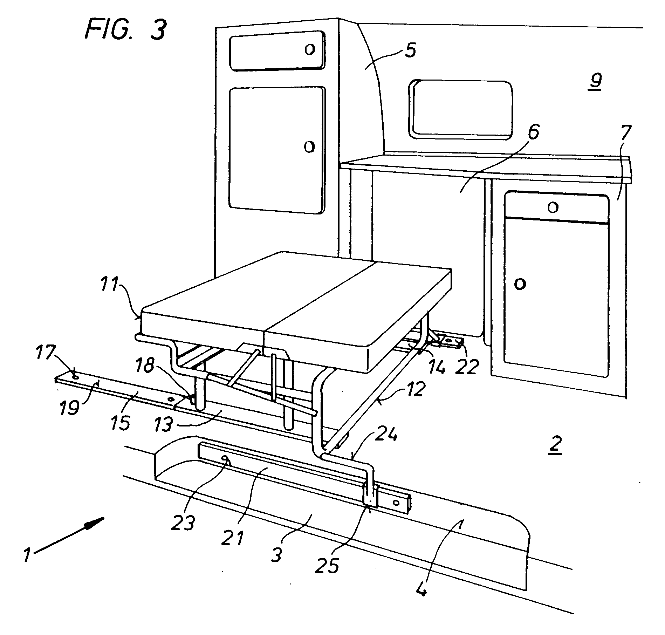

Die in einem Fahrzeug 1 nach Art eines Reisemobils eingebaute Sitzbank 11 ist mittels einer Halterung an dessen Boden 2 verschiebbr angeordnet und in drei Betriebsstellungen, nämlich gemäß Figur 1 in der Wohnstellung, nach Figur 2 in der Fahrstellung und gemäß Figur 3 in der Schlafstellung arretierbar. Dazu dienen an einem Traggestell 12 der Sitzbank 11 angebrachte Laufschienen 13 und 14, die in Bodenschienen 15 und 16 verschiebbar geführt sind, sowie zwei zusätzliche Bodenschienen 21 und 22, in denen die Sitzbank 11 mittels Stützgliedern 25 und 27 ebenfalls verschiebbar abgestützt ist.

Die beiden zusätzlichen Bodenschienen 21 und 22 sind hierbei gegenüber den herkömmlichen Bodenschienen 15 und 16 seitlich nach außen versetzt angeordnet, und zwar ist die Bodenschiene 21 mittels Schrauben 23 an einer vertikalen Wand 4 einer Trittstufe 3 befestigt, die Bodenschiene 22 dagegen ist unmittelbar neben einer einer Eingangstür 8 gegenüberliegenden Außenwand 9 des Fahrzeuges 1 zwischen zwei Einbauschränken 5 und 7 auf den Boden 2 aufgechraubt. Auf diese Weise sind im Eingangs- und Sitzbereich auf dem Boden 2 keine störenden Einbauten vorhanden, durch die die Nutzung des Fahrzeuges 1 beeinträchtigt würde, dennoch kann die Sitzbank 11 über einen großen Bereich verstellt werden.

Die Stützglieder 25 und 27 sind an seitlich auskragenden Armen 24 bzw. 26 befestigt, die in dem der Rückenlehne der Sitzbank 11 gegenüberliegenden Bereich an dem Traggestell 12 angebracht sind. Des weiteren ist auf der Laufschiene 15 eine Federraste 18 vorgesehen, die in Ausnehmungen 19, 19' oder 19'', die in die mittels Schrauben 17 befestigte Bodenschiene 15 eingearbeitet sind, einrastbar ist. Die Sitzbank 11 ist somit in Wohnstellung (Figur 1),in Fahrstellung vor einem zwischen den Schränken 5 und 7 vorgesehenen Klapptisch 6 (Figur 2) sowie in einer Schlafstellung (Figur 3) arretierbar. Und zum Herausnehmen der Sitzbank 11 ist diese lediglich noch geringfügig über die Fahrstellung hinaus zu verschieben, so daß die Laufschienen 13, 14 von den Bodenschienen 15, 16 und die Stützglieder 25, 27 von den Bodenschienen 21, 22 gelöst sind.

Das Umrüsten des Fahrzeuges 1 zum Transport von Gütern ist somit ohne Schwierigkeiten und in kurzer Zeit vorzunehmen, auch ist ein großer Verstellbereich der Sitzbank 11 gegeben, dennoch wird der Wohnbereich nicht durch störende Einbauten beieinträchtigt.

## Patentansprüche

1. Halterung für eine Sitzbank eines Reisemobils, die über ein Traggestell und zwei an diesem angebrachten Laufschienen sowie zwei am Boden des mit einer seitlichen Eingangstür versehenen Fahrzeuges befestigten Bodenschienen in dessen Längsrichtung verschiebbar gehalten ist,
**dadurch gekennzeichnet,**
daß zusätzlich zu den die Laufschienen (13, 14) des Traggestells (12) abstützenden Bodenschienen (15, 16) zwei weitere seitlich gegenüber diesen nach außen versetzt angeordnete Bodenschienen (21, 22) vorgesehen sind, von denen die eine Bodenschiene (21) im Bereich der Eingangstür (8) des Fahrzeuges (1) an einer vertikalen Wand (4) und die andere Bodenschiene (22) auf der gegenüberliegenden Seite nahe der Außenwand (9) des Fahrzeuges (1) angebracht sind, und daß das Traggestell (12) in dem der Rückenlehne der Sitzbank (11) gegenüberliegenden Bereich nach außen ragende Arme (24, 26) aufweist, an deren Enden jeweils ein Stützglied (25, 27) befestigt ist, die in den beiden äußeren Bodenschienen (21, 22) verschiebbar geführt sind.

2. Halterung nach Anspruch 1,
**dadurch gekennzeichnet,**
daß die an einer vertikalen Wand des Fahrzeuges (1) befestigte Bodenschiene (21) an der vertikalen Wand (4) einer Trittstufe (3) oder vertikal über oder unter einer Laufschiene einer Schiebetür angebracht ist.

3. Halterung nach Anspruch 1 oder 2,
**dadurch gekennzeichnet,**
daß die der Eingangstür (8) des Fahrzeuges (1) gegenüberliegend angeordnete Bodenschiene (22) zwischen zwei Einbauteilen, beispielsweise zwischen zwei Wandschränken (5, 7), am Boden (2) des Fahrzeuges (1) befestigt ist.

4. Halterung nach einem oder mehreren der Ansprüche 1 bis 3,
**dadurch gekennzeichnet,**
daß die Sitzbank (11) mittels einer auf der der Eingangstür (8) zugekehrten Laufschiene (15) angebrachten Federraste (18), die in in Ausnehmungen (19, 19', 19'') der diese abstützenden Bodenschiene (13) einrastbar ist, in mindestens zwei, vorzugsweise in drei Betriebsstellungen arretierbar ist.

## Claims

1. Retaining mechanism for a seat in a touring vehicle which is held in place in such a way as to enable it to be moved along its longitudinal axis by means of a carrier frame, two runners attached to the carrier frame and two floor rails fixed onto the floor of the vehicle which has an entrance door in its side,
**characterized in that**,
in addition to the floor rails (15, 16) upon which the runners (13, 14) of the carrier frame (12) are supported, two additional floor rails (21, 22) are positioned to the side of the former floor rails (15, 16) and are offset towards the exterior, and of these latter floor rails (21, 22), one floor rail (21) is attached to the vehicle floor (2) in the region of the entrance door (8) of the vehicle (1) on a vertical wall (4) and the other floor rail (22) is attached to the vehicle floor (2) on the opposite side near to the outer wall (9) of the vehicle, and that the carrier frame (12) has arms (24, 26) projecting outward from the region of the carrier frame (12) on the opposite side to the backrest of the seat (11), to the ends of each arm (24, 26) being attached a supporting member (25, 27) which can be moved along either external floor rail (21, 22).

2. Retaining mechanism in accordance with Claim 1,
**characterized in that**,
the floor rail (21) which is attached to a vertical wall of the vehicle (1) is attached to the vertical wall (4) of a step (3) or is vertically attached either above or below a runner rail for a sliding door.

3. Retaining mechanism in accordance with Claim 1 or Claim 2,
**characterized in that**,
the floor rail (22) fitted on the opposite side of the vehicle (1) to the entrance door (8) is fixed to the vehicle floor (2) between two fixture elements, for example between two wall cupboards (5, 7).

4. Retaining mechanism in accordance with one or more of Claims 1 to 3,
**characterized in that**,
the bench (11) can be locked in at least two, and in a preferred embodiment, three positions by means of a spring detent (18) attached to the runner (15) on the entrance door (8) side, which clips into notches (19, 19', 19'') of the floor rail (13) against which the runner (15) is supported.

## Revendications

1. Fixation pour une banquette d'un camping car, déplaçable en direction longitudinale et retenue au moyen d'un support et de deux glissières fixées sur celui-ci, ainsi que de deux glissières de fond fixées sur le fond du véhicule muni d'une portière latérale,
caractérisée en ce que
supplémentairement aux glissières de fond (15, 16) appuyant les glissières (13, 14) du support (12), il soit prévu deux autres glissières de fond (21, 22) disposées latéralement a l'extérieur, dont l'une (21) à l'endroit de la portière (8) du véhicule (1) est fixée sur une paroi verticale (4) et l'autre (22) sur la face opposée proche de la paroi extérieure (9) du véhicule (1), et que le support (12) soit équipé, à l'endroit opposé au dossier de la banquette (11), de bras saillants (24, 26) portant respectivement aux extrémités un élément d'appui (25, 27), déplaçables dans les deux glissières de fond extérieures (21, 22).

2. Fixation d'après la revendication 1,
caractérisée en ce que
la glissière de fond (21) fixée sur une paroi verticale du véhicule (1) soit prévue sur une paroi verticale (4) d'une marche (3) ou bien verticalement au-dessus ou en-dessous d'une glissière d'une porte coulissante.

3. Fixation d'après la revendication 1 ou 2,
caractérisée en ce que
la glissière de fond (22) disposée en face de la portière d'entrée (8) du véhicule (1) soit fixée entre deux éléments d'équipement, p. ex. sur le fond (2) du véhicule (1) entre deux placards (5, 7).

4. Fixation d'après une ou plusieurs des revendications 1 à 3,
caractérisée en ce que
la banquette (11) soit ajustable dans au moins deux, mais de préférence trois positions au moyen d'un crantage à ressort (18) prévu sur la glissière (13) disposée face à la portière (8) et s'engrenant dans des évidements (19, 19', 19'') de la glissière de fond (15) appuyant celle-ci.
